Europäisches Patentamt

(19) European Patent Office

Office européen des brevets

(11) Numéro de publication : **0 366 772 B1**

(12) # FASCICULE DE BREVET EUROPEEN

(45) Date de publication du fascicule du brevet :
**27.11.91 Bulletin 91/48**

(51) Int. Cl.⁵ : **G01S 1/70, G05D 1/03**

(21) Numéro de dépôt : **89905703.8**

(22) Date de dépôt : **09.05.89**

(86) Numéro de dépôt international :
**PCT/FR89/00221**

(87) Numéro de publication internationale :
**WO 89/11107 16.11.89 Gazette 89/27**

(54) **RECEPTEUR DE LASERS TOURNANTS UTILISES POUR LE GUIDAGE D'ENGINS, DE TRAVAUX PUBLICS NOTAMMENT.**

(30) Priorité : **10.05.88 FR 8806559**

(43) Date de publication de la demande :
**09.05.90 Bulletin 90/19**

(45) Mention de la délivrance du brevet :
**27.11.91 Bulletin 91/48**

(84) Etats contractants désignés :
**AT BE CH DE FR GB IT LI LU NL SE**

(56) Documents cités :
**DE-A- 1 211 302**
**DE-A- 3 616 269**
**GB-A- 2 089 615**
**US-A- 3 209 148**
**US-A- 3 719 424**
**US-A- 4 700 301**

(56) Documents cités :
**Proceedings of the National Electronics Conference, 7-9 decembre 1970,Chicago, Illinois,vol.26, J.S. Miller et al.: "Application of solar aspect sensors as navigation components",pages 428-433,voir page 428,colonne de droite,lignes 27-32; page 432,figure 2**

(73) Titulaire : **GV SA**
**127 chemin Chantegrillet**
**F-69110 Ste-Foy-les-Lyon (FR)**

(72) Inventeur : **VUAGNAT, Louis**
**127, chemin Chantegrillet**
**F-69110 Ste-Foy-les-Lyon (FR)**

(74) Mandataire : **Laurent, Michel**
**Cabinet LAURENT et CHARRAS, 20, rue Louis Chirpaz B.P. 32**
**F-69131 Ecully Cedex (FR)**

## Description

La présente invention a trait à un nouveau type de récepteur de lasers tournants utilisés pour le guidage d'engins dans le domaine des travaux publics, domaine agricole, voire même industriel.

Dans la description, l'invention sera décrite pour un récepteur utilisé dans le domaine des travaux publics, mais cela n'est pas limitatif et un tel récepteur pourrait également être utilisé dans tout autre domaine où se posent des problèmes similaires.

Dans le domaine des travaux publics, pour réaliser la mise à niveau d'un sol, régler la pente d'une tranchée.., on utilise de plus en plus comme élément de contrôle des matériels mettant en oeuvre des lasers.

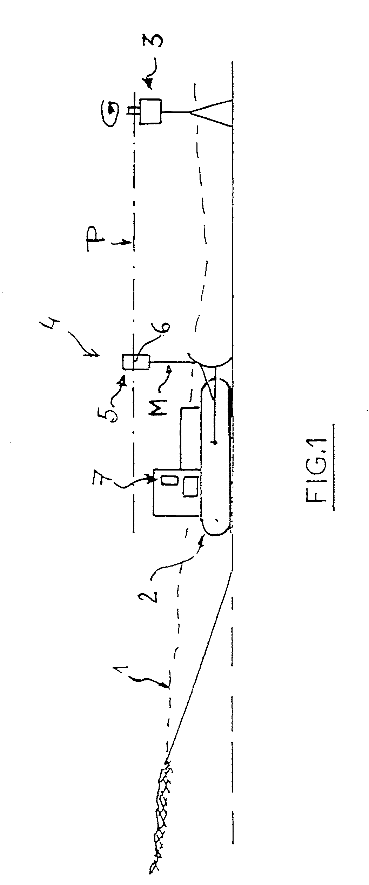

La figure 1 illustre, de manière schématique, la mise en oeuvre d'un tel type d'instrument.

D'une manière générale, on utilise pour amener un terrain à un profil souhaité, des lasers tournants qui servent à guider l'engin (2) de manière semi-automatique ou automatique. De tels ensembles se composent essentiellement d'un émetteur (3) comprenant l'émetteur laser proprement dit monté sur un support et un récepteur (4) monté, quant à lui, sur l'engin proprement dit. Ce récepteur (4) comprend essentiellement :

– des cellules de réception (5,6) captant le passage du faisceau laser sur 360° ;

– un mât (M), télescopique ou non, supportant ledit récepteur ;

– un boitier (7) permettant d'assurer le contrôle visuel lorsque l'engin fonctionne en mode semi-automatique ou un boitier de contrôle et d'asservissement qui permet le contrôle visuel et l'asservissement ;

– des câbles d'alimentation et de liaison cellule-boitier.

Pour la mise en oeuvre de tels ensembles, on peut utiliser soit des émetteurs à diode laser (faisceau invisible), soit des émetteurs lasers hélium-néon (faisceau visible).

D'une manière générale, de tels lasers sont utilisés dans les niveaux électroniques qui, par effet de rotation de la tête émettrice (3), définissent un plan P de référence, horizontal ou non, voire même un plan vertical. Dans tous les cas de figure, l'information de position est obtenue par l'intermédiaire de la cellule (6) du récepteur (5) qui peut être soit tenu à la main, soit de préférence, monté sur une canne télescopique ou non (M) fixée à l'engin lui-même.

La présente invention a trait plus particulièrement à un perfectionnement apporté aux récepteurs montés sur les engins.

A ce jour, les récepteurs utilisés pour mettre en oeuvre cette technique sont constitués essentiellement par une colonne portant un ensemble constitué de quatre ensembles d'éléments photosensibles disposés orthogonalement les uns par rapport aux autres et ce, afin de pouvoir couvrir la plage de 360°. Les quatres plaquettes sont généralemert montées de manière permanente sur un support approprié et sont difficilement démontables, ce qui pose un problème lorsque l'une d'entre elles est cassée ou dégradée. De tels ensembles récepteurs sont donc coûteux à réaliser et pratiquement difficiles à réparer ou à entretenir.

Or on a trouvé, et c'est ce qui fait l'objet de la présente invention, un nouveau type de récepteur qui permet de résoudre ces problèmes par le fait qu'il autorise un démontage aisé des plaquettes support-tant les éléments photosensibles (photodiode). Par ailleurs, du fait de sa conception même, il autorise l'utilisation d'un ensemble ne comportant que trois plaquettes supports de photodiodes (au lieu de quatre comme dans les récepteurs connus à ce jour), ce qui en diminue notablement les coûts.

Enfin, le récepteur conforme à l'invention permet d'éliminer toute détérioration qui peuvent résulter des vibrations, chocs produits en cours d'utilisation de l'engin porteur.

D'une manière générale, l'invention concerne donc un perfectionnement apporté aux dispositifs de réception pour lasers tournants émettant un faisceau rotatif dans un plan de référence et utilisés pour le guidage d'engins de travaux publics et qui comporte un ensemble de réception monté sur un support permettant sa fixation sur un mât associé à l'engin, cet ensemble étant constitué de plaquettes portant des photodiodes et qui sont disposées autour d'un axe fixe de manière à former une colonne pour capter le passage du faisceau rotatif sur 360°, ledit ensemble étant protégé par une enceinte périphérique recouverte d'un capot protecteur. Le récepteur selon l'invention se caractérise en ce que les plaquettes de photodiodes sont au nombre de trois et sont disposées verticalement autour dudit axe fixe permettant de les maintenir les unes par rapport aux autres en formant un angle de 60°, lesdites plaquettes étant maintenues en position par des entretoises hexagonales (12,13) portées par ledit axe et fixées sur des éléments supports (16,17,18) portés par ledit axe au moyen d'équerres de serrage (19,20), de manière amovible et par l'intermédiaire d'éléments amortisseurs respectivement disposés à chaque extrémité dudit axe fixe et autour de cet axe.

Par ailleurs, selon une forme de réalisation préférentielle conforme à l'invention :

– l'enceinte périphérique est surmontée d'un capot protecteur débordant par rapport à l'enceinte périphérique et qui élimine tout risque de détérioration de ladite enceinte lorsque le récepteur est enlevé de l'engin et posé sur le côté ;

– le boitier supportant l'ensemble récepteur se présente essentiellement sous la forme d'un parallélépipède en deux parties articulées l'une par rapport à l'autre, l'une supportant le récepteur proprement dit, l'autre comportant des moyens permettant d'assurer le blocage dudit boîtier sur une colonne support ; avantageusement, dans un tel mode de réalisation, le blocage est assuré par l'intermédiaire d'un ensemble comportant une partie en V contre laquelle s'appuiera la colonne de maintien, le blocage de cette dernière étant assuré par un élément presseur dont l'action est contrôlée, disposé sur la face opposée du V.

L'invention et les avantages qu'elle apporte seront cependant mieux compris grâce à l'exemple de réalisation donné ci-après à titre indicatif mais non limitatif et qui est illustré par les schémas annexés dans lesquels :

    – la figure 2 est une vue schématique en perspective de l'ensemble d'un récepteur conforme à l'invention ;

    – la figure 3 est une vue éclatée montrant la structure d'un tel ensemble récepteur ;

    – la figure 4 est une vue de dessus illustrant un mode de réalisation du boîtier supportant le récepteur et permettant sa fixation sur un mât associé à l'engin.

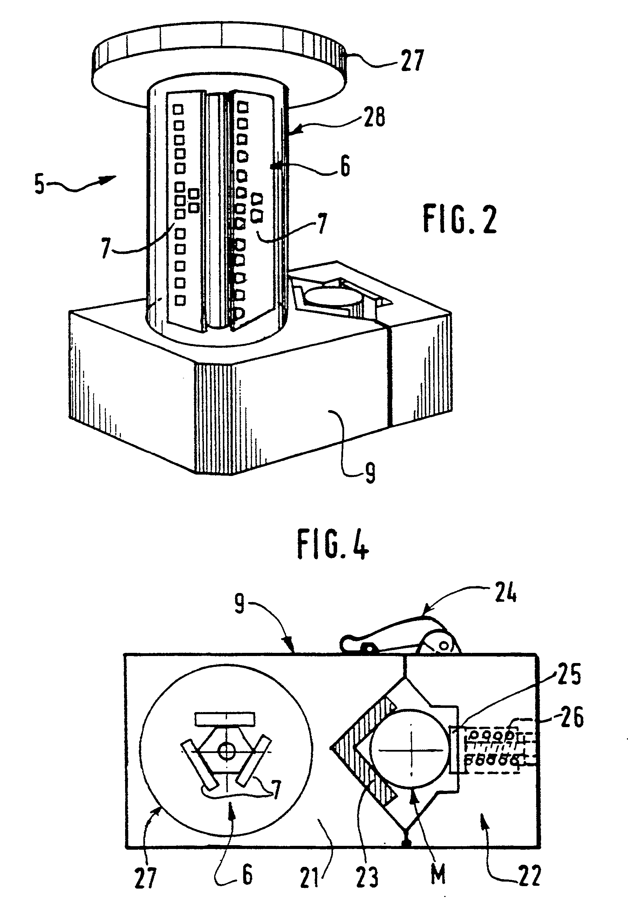

Si l'on se reporte aux figures annexées, le récepteur de lasers tournants conforme à l'invention et qui est désigné par la référence générale (5) (voir figure 2) se présente essentiellement sous la forme d'un ensemble de réception proprement dit (6) comportant des plaquettes (7) portant des photodiodes (8). Cet ensemble est monté de manière à former une colonne sur un boîtier support désigné par la référence générale (9), l'ensemble étant protégé par une enceinte périphérique (28) à base d'un matériau pouvant être traversé par le faisceau laser et équipé d'un filtre polarisant ou électronique.

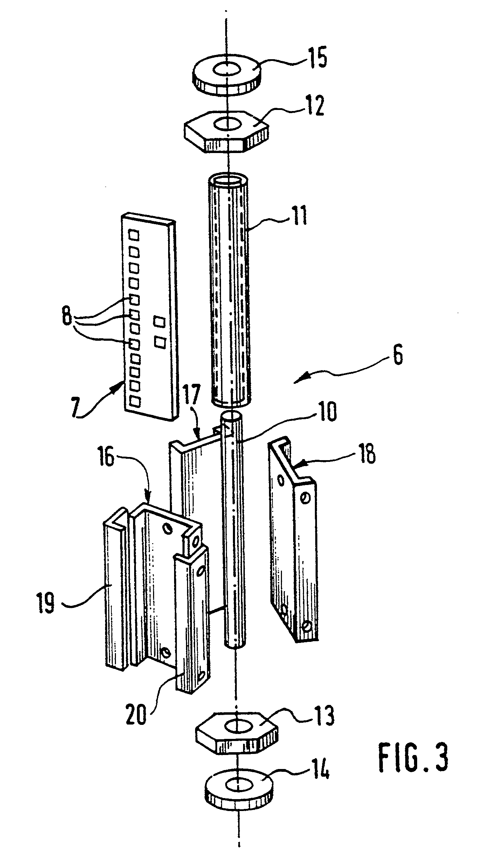

Conformément à l'invention, et ainsi que cela ressort plus particulièrement de la figure 3, l'ensemble de réception (6) comporte essentiellement trois plaquettes (7) de photodiodes (une seule de ces plaquettes étant montrée à la figure 3), ces plaquettes étant disposées autour d'un axe support central assurant leur maintien et formant entre elles un angle de 60° par rapport les unes aux autres. Conformément à l'invention, la fixation des plaquettes autour de l'axe central (10) est réalisée, de telle sorte que non seulement elles soient montées de manière amovibles mais qu'également, tout l'ensemble soit amorti. Pour ce faire, ainsi que cela ressort de la figure 3 annexée, l'axe central (10) est entouré par une couche de matériau amortisseur (tube en caoutchouc par exemple) (11), cet axe étant maintenu par deux entretoises hexagonales (12,13) et deux éléments amortisseurs d'appui supérieur (14) et d'appui inférieur (15) étant disposés à chacune des extrémités. Les entretoises hexagonales (12,13) servent non seulement à assurer le maintien de plaques supports (16,17,18) identiques en forme de U, mais également à positionner de manière parfaite à 60° les unes par rapport aux autres les plaques de photodiodes (7). Le maintien desdites plaques (7) sur les éléments supports (16,17,18) est assuré au moyen d'équerres de serrage (19,20) bloquées latéralement au moyen de vis contre les faces latérales des supports en U. Les parties débordantes des équerres (19,20) assurent le maintien des plaques (7) par leurs côtés.

Un tel ensemble est monté sur un boîtier support (9) de forme sensiblement parallélépipédique et qui se présente essentiellement sous la forme d'un bloc en deux parties (21,22), l'une (21) supportant le récepteur proprement dit (6), l'autre (22), articulée par rapport à la précédente, permettant d'assurer le blocage dudit support sur la colonne ou mât de maintien (M) associé à l'engin (voir figure 1). Dans le mode de réalisation préférentiel illustré aux figures 2 et 3 pour, non seulement assurer un blocage parfait de l'ensemble autour de la colonne, mais également amortir les chocs, le blocage est obtenu en prévoyant sur la partie (21) du bloc support une zone en forme de V contre laquelle vient s'appuyer la colonne (M). Cette zone en forme de V est recouverte d'une couche de matériau amortisseur (23) en caoutchouc par exemple. Le serrage de l'ensemble autour de la colonne de maintien (M) est obtenu d'une part, au moyen d'un élément de blocage (du type à crochet pivotant par exemple) (24) et, d'autre part, par un système presseur (25) constitué essentiellement d'un patin soumis à l'action d'un ressort taré (26) permettant de contrôler la pression. Un tel type de boîtier permet donc d'assurer un montage et démontage aisés du récepteur et, par ailleurs, assure un positionnement précis et parfait dudit récepteur autour de l'axe support (6) monté sur l'engin.

Enfin, le récepteur (6) est recouvert d'un capot protecteur (27) (voir figure 2), ce capot débordant par rapport à l'enceinte périphérique et son diamètre étant avantageusement égal à la largeur du bloc support. De cette manière, lorsque le récepteur est démonté, on peut le poser sur le côté sans aucun risque d'endommagement puisqu'il vient prendre appui d'une part sur le bloc (9) et d'autre part, sur la périphérie du capot (27). De plus, le capot protecteur (27) est vissé par l'intérieur sur l'axe (10) et comporte pour ce faire un filetage borgne (non visible sur les schémas) qui ne débouche donc pas à la partie supérieure, ce qui assure une étanchéité parfaite de l'ensemble. Par ailleurs, cette étanchéité est également améliorée par la présence de joints additionnels (non représentés) et qui sont disposés aux deux extrémités de l'enceinte pour éliminer tout risque d'infiltration d'eau ou de poussière.

Par rapport aux récepteurs de lasers proposés jusqu'à ce jour, l'invention présente de nombreux avantages par le fait que, non seulement, elle permet de capter le passage du faisceau laser sur 360° en utilisant seulement trois plaquettes de photodiode (au lieu de quatre comme à ce jour), mais que par ailleurs, grâce à sa conception, elle autorise un démontage aisé des plaquettes de photodiode en vue de les remplacer dans l'hypothèse où elles sont endommagées ou détériorées. De plus, en usage normal, compte-tenu que tout l'ensemble est monté sur des blocs amortisseurs, les vibrations transmises par l'engin ne perturberont pas le fonctionnement de l'ensemble. Enfin, le récepteur (6) étant excentré sur le boitier support (9) par rapport à son axe de montage sur l'engin, il est possible, par simple pivotement, de le disposer soit à l'extérieur de l'engin, soit à l'intérieur s'il y a des risques d'accrochage ou de choc (par exemple lors de travaux à l'intérieur d'un bâtiment).

Bien entendu, l'invention n'est pas limitée à l'exemple de réalisation décrit précédemment, mais elle en couvre toutes les variantes réalisées dans le même esprit.

## Revendications

1. Dispositif de réception pour lasers tournants émettant un faisceau rotatif dans un plan de référence et utilisés pour le guidage d'engins de travaux publics, ledit dispositif comportant un ensemble de réception (6), disposé sur un support (9) permettant sa fixation sur un engin, ledit ensemble étant constitué de plaquettes (7) portant des photodiodes (8) et qui sont disposées autour d'un axe fixe de manière à former une colonne pour capter le passage du faisceau rotatif sur 360°, et ledit ensemble étant protégé par une enceinte périphérique (28) recouverte d'un capot protecteur (27), caractérisé en ce que les plaquettes (7) de photodiodes (8) sont au nombre de trois et sont disposées verticalement autour dudit axe fixe en formant entre elles un angle de 60° les unes par rapport aux autres, lesdites plaquettes étant maintenues en position par des entretoises hexagonales (12,13) portées par ledit axe et fixées sur des éléments supports (16,17,18) portés par ledit axe au moyen d'équerres de serrage (19,20) de manière à ce qu'elles soient amovibles et par l'intermédiaire d'éléments amortisseurs respectivement disposés à chaque extrémité dudit axe fixe (7) et autour de cet axe.

2. Dispositif de réception pour lasers tournants selon la revendication 1, caractérisé en ce que le capot protecteur (27) déborde par rapport à l'enceinte périphérique (28) pour éliminer tout risque de détérioration de ladite enceinte lorsque le récepteur est démonté et posé sur le côté.

3. Dispositif de réception pour lasers tournants selon l'une des revendications 1 et 2, caractérisé en ce que ledit support (9) supportant l'ensemble de réception se présente sous la forme d'un parallélépipède en deux parties articulées (21,22) l'une par rapport à l'autre, la première partie articulé (21) supportant la cellule de réception, la seconde partie articulée (22) comportant des moyens permettant d'assurer, le blocage dudit support sur un mât de maintien (M) porté par l'engin.

4. Dispositif de réception pour lasers tournants selon la revendication 3, caractérisé en ce que pour assurer le blocage du support (9) sur le mât de maintien (M) la première partie articulée comporte une partie en V contre laquelle vient s'appuyer le mât (M) et qui est recouverte d'une couche de matériau amortisseur (23), et pour assurer le serrage de l'ensemble autour du mât de maintien (M) la seconde partie articulée comporte d'une part, un élément de blocage (24) du type à crochet pivotant et, d'autre part, un système presseur (25) constitué essentiellement d'un patin soumis à l'action d'un ressort taré (26) permettant de contrôler la pression.

## Patentansprüche

1. Empfängervorrichtung für sich drehende Laser, welche einen in einer Referenzebene rotierenden Strahl aussenden und für die Führung von Maschinen für öffentliche Arbeiten verwendet werden, wobei die Vorrichtung eine Empfängeranordnung (6) umfaßt, die auf einem seine Befestigung an einer Maschine ermöglichenden Träger (9) angeordnet ist, wobei die Anordnung von Scheiben (7) gebildet ist, die Photodioden (8) tragen und derart um eine feste Achse angeordnet sind, daß sie eine Säule zum Erfassen der Bahn des sich um 360° drehenden Strahles bilden, und wobei die Anordnung durch eine umgebende Einfassung (28) geschützt ist, die von einer Schutzkappe (27) abgedeckt ist, dadurch gekennzeichnet, daß die Scheiben (7) von Photodioden (8) in einer Anzahl von drei vorliegen und vertikal um die feste Achse angeordnet sind, indem sie zwischen sich - die einen bezogen auf die anderen - einen Winkel von 60° bilden, wobei die Scheiben durch von der Achse getragene hexagonale Zwischenträger (12, 13) in Position gehalten werden und mit Hilfe von Klemmwinkeln (19, 20) auf Halteelementen (16, 17, 18) befestigt sind, die so von der Achse getragen sind, daß sie abnehmbar sind und zwar mittels jeweils an jedem Ende der festen Achse (7) und um diese Achse herum angeordneten Dämpfungselementen.

2. Empfängervorrichtung für sich drehende Laser nach Anspruch 1, dadurch gekennzeichnet, daß die Schutzkappe (27) über die umgebende Einfassung (28) vorsteht, um jedes Risiko der Beschädigung der Einfassung auszuschließen, wenn der Empfänger abgebaut und zur Seite gelegt ist.

3. Empfängervorrichtung für sich drehende Laser nach einem der Ansprüche 1 oder 2, dadurch gekennzeichnet, daß der die Empfängeranordnung tragende Träger (9) die Form eines Parallelepipeds aus zwei miteinander gelenkig verbundenen Teilen (21, 22) aufweist, wobei das erste angelenkte Teil (21) die Empfängerzelle trägt, das zweite angelenkte Teil (22) Mittel aufweist, die es ermöglichen, das Festklemmen des Trägers an einen von der Maschine getragenen Haltemast (M) zu sichern.

4. Empfängervorrichtung für sich drehende Laser nach Anspruch 3, dadurch gekennzeichnet, daß zum Sichern des Festklemmens des Trägers (9) an dem Haltemast (M) das erste angelenkte Teil einen Abschnitt in V-Form aufweist, gegen den sich der Mast (M) abstützt und der von einer Auflage aus dämpfendem Material (23) abgedeckt ist, und daß zum Sichern der Klemmung der Anordnung um den Haltemast (M) das zweite angelenkte Teil einerseits ein Klemmelement (24) vom Typ eines schwenkbaren Hebels und andererseits ein Preßsystem (25) umfaßt, das im wesentlichen einen Schuh aufweist, welcher der Wirkung einer austarierten Feder (26) unterworfen ist, die die Kontrolle der Druckkraft ermöglicht.

## Claims

1. Receiver device for rotating lasers emitting a beam rotating in a reference plane, which are used to guide public works machines, the said device carrying a receiver assembly (6) disposed on a support (9) permitting fastening thereof onto a machine, the said assembly consisting of plates (7) carrying photodiodes (8) and which are disposed around a fixed shaft so as to form a pillar for detecting passage of the rotating beam over 360°, and the said assembly being protected by a peripheral shell (28) covered with a protective hood (27), characterised in that the photodiode (8) plates (7) are three in number and are disposed vertically around the said fixed shaft forming an angle of 60° between them, the said plates being held in position by hexagonal spacers (12, 13) carried by the said shaft and attached to support members (16, 17, 18) carried by the said shaft by means of clamping right-angle brackets (19, 20) in such a way that they are detachable and by way of damping members disposed respectively at each end of the said fixed shaft and around this shaft.

2. Receiver device for rotating lasers according to Claim 1, characterised in that the protective hood (27) projects beyond the peripheral shell (28) in order to eliminate any risk of damaging the said shell when the receiver is removed and laid to the side.

3. Receiver device for rotating lasers according to one of Claims 1 and 2, characterised in that the said support (9) supporting the receiver assembly is in the form of a parallelepiped with two parts (21, 22) articulated relative to one another, the first articulated part (21) supporting the receiver unit, the second articulated part (22) comprising means enabling the said support to be locked on a holding mast (M) carried by the machine.

4. Receiver device for rotating lasers according to Claim 3, characterised in that, in order to enable the locking of the support (9) on the holding mast (M), the first articulated part comprises a V-shaped part against which the mast (M) bears and which is covered with a layer of damping material (23), and in order to enable the clamping of the assembly around the holding mast (M), the second articulated part comprises, on the one hand, a locking member (24) of the pivoting hook type and, on the other hand, a presser mechanism (25) consisting essentially of a shoe subjected to the action of a calibrated spring (26) enabling the pressure to be controlled.

FIG.1

FIG. 2

FIG. 4

FIG.3